# EUROPÄISCHE PATENTSCHRIFT

(11) **EP 1 381 717 B1**
(45) Veröffentlichungstag und Bekanntmachung des Hinweises auf die Patenterteilung: **28.09.2005**
(21) Anmeldenummer: 02740264.3
(22) Anmeldetag: 19.04.2002
(51) Int. Cl.: C25F 1/00

(54) **VERFAHREN UND VORRICHTUNG ZUR ELEKTROCHEMISCH MATERIALABTRAGENDEN WERKSTÜCKBEARBEITUNG**
METHOD AND DEVICE FOR MACHINING WORKPIECES BY ELECTROCHEMICALLY REMOVING MATERIAL
PROCEDE ET DISPOSITIF D'USINAGE DE PIECES PAR ENLEVEMENT ELECTROCHIMIQUE DE MATIERE

(30) Priorität: 20.04.2001 DE 10119649
(43) Veröffentlichungstag der Anmeldung: 21.01.2004
(73) Patentinhaber: Dorner GmbH, 74405 Gaildorf (DE)
(72) Erfinder: SCHEKULIN, Dirk, 72820 Sonnenbühl (DE); SCHEKULIN, Ulrich, 72074 Tübingen (DE)
(74) Vertreter: Schuster, Gregor
(86) Internationale Anmeldenummer: PCT/DE2002/001450
(87) Internationale Veröffentlichungsnummer: WO 2002/086198

(56) Entgegenhaltungen:
- WO-A-97/03781
- DE-C- 19 900 173

## Beschreibung

Die Erfindung bezieht sich auf ein Verfahren zur elektrochemisch materialabtragenden Werkstückbearbeitung nach dem Oberbegriff des Anspruchs 1 sowie auf eine entsprechende Vorrichtung nach dem Oberbegriff des Anspruchs 3.

Ein Verfahren und eine Vorrichtung dieser Art sind in der Patentschrift DE 199 00 173 C 1 beschrieben. Die Prozessparameter sind dort insbesondere auf die Strukturierung von Halbleiterwafern ausgelegt, um durch elektrochemischen Materialabtrag Lithographie- und Ätzschritte zu ersetzen. Die spezielle Auslegung hat unter anderem zum Inhalt, dass der zeitliche Mittelwert der angelegten Spannung einen Wert innerhalb desjenigen. Bereichs einer Systemkennlinie hat, in welchem kein merklicher Reaktionsstrom fließt. Die relativ zu diesem Mittelwert gemessenen Ausschläge der angelegten Spannung werden in ihrer Amplitude, ihrer Dauer und ihrem Zeitabstand derart dimensioniert, dass die sich bildende elektrochemische Doppelschicht zumindest am Werkstück und dort nur in Bereichen, die nicht weiter als eine gewählte Maximaldistanz von der Werkzeugelektrode entfernt liegen, periodisch zwischen zwei Ladespannungen umgeladen wird, von denen zumindest eine zur Herbeiführung der gewünschten Reaktion ausreicht. Die Geometrie des Zwischenraums zwischen den Elektroden wird so bemessen, dass nur die Punkte der zu bearbeitenden Werkstückzone innerhalb der genannten Maximaldistanz liegen. Zur Prüfung, ob der Elektrodenabstand unterhalb des Maximalabstandes liegt, wird eine Beobachtung von Lade- oder Rückladespitzen des Elektrodenstroms vorgeschlagen. Dazu wird von der Annahme ausgegangen, dass bei rechteckförmigen angelegten Spannungsimpulsen und größeren Elektrodenabständen der Elektrodenstromverlauf dem Spannungsimpulsverlauf formgleich folgt, während er demgegenüber bei kleinerem Elektrodenabstand eine additiv zum rechteckförmigen Basisanteil hinzutretende, pcakformige aniangliche Überhöhung zeigt, mit der eine auf das Ende des Spannungsimpulses folgende, entgegengesetzte Rücklade-Stromspitze korrespondiert. Dieser Effekt wird der Umladung von Doppelschichtkapazitätsbereichen zugeschrieben. Das Auftreten solcher Lade- und Rückladespitzen wird dahingehend gewertet, dass der Elektrodenabstand unterhalb des Maximalabstandes liegt. Eine Oberflächenpassivierung durch Oxidbildung soll bei diesem Verfahren verhindert werden, wozu ein vergleichsweise niedriger pH-Wert für den Elektrolyten eingestellt wird.

Aus der Offenlegungsschrift W 97/03781 A2, welches Dokument den nächstliegenden Stand der technik darstellt, sind ein Verfahren und eine Vorrichtung zur elektrochemisch materialabtragenden Werkstückbearbeitung bekannt, bei denen abwechselnd Stromimpulse einer ersten Polarität und Spannungsimpulse einer entgegengesetzte Polarität angelegt werden. Die Stromimpulse dienen primär dem Materialabtrag, wobei sich gleichzeitig eine Passivierungsschicht an der Werkstückoberfläche bilden kann. Mit den abwechselnden Spannungsimpulsen entgegengesetzter Polarität soll eine Oberflächendepassivierung erreicht werden. Synchron zum alternierenden Anlegen der Strom- und Spannungsimpulse kann eine oszillierende Vorschubbewegung, der Werkzeugelektrode vorgesehen sein, wobei der Elektrodenabstand während der Stromimpulse geringer als während der Spannungsimpulse ist. Die Amplitude der Spannungsimpulse wird zwischen zwei speziell vorgegebenen Grenzwerten eingestellt, die abhängig vom Auftreten einer gegebenen Oberflächenqualität des Werkstücks und von Verschleiß der Werkzeugelektrode anhand eines vorausgehenden Testvorgangs bestimmt werden. Dieser Test beinhaltet ein allmähliches Erhöhen der Amplitude der Spannungsimpulse, wobei die beiden Spannungsgrenzwerte anhand einer Vorzeichenumkehr der Differenz zwischen aufeinanderfolgenden Werten eines Parameters ermittelt werden, der für eine Eigenschaft des Elektrodenabstandes repräsentativ ist und z.B. aus einem globalen Spannungsminimum besteht, das in Abhängigkeit vom Elektrodenabstand während der Stromimpulse auftritt, wenn eine oszillatorische Relativbewegung zwischen Werkstück und Werkzeugelektrode ausgeführt wird. Eine Schwierigkeit beim Arbeiten mit eingeprägtem Stromstärke- statt Spannungsimpulsen in materialabtragaktiven Zeiträumen besteht darin, dass die Stromdichte bei sich ändernder Ausdehnung der sich gegenüberstehenden Grenzflächen von Werkstück und Werkzeugelektrode merklich schwanken kann.

Bei einem Verfahren und einer Vorrichtung, wie sie in der Offenlegungsschrift WO 99/51382 A2 beschrieben sind, werden abwechselnd zu materialabtragenden elektrischen Impulsen elektrische Passivierungsimpulse derselben Polarität wie die materialabtragenden Impulse angelegt, wobei die Passivierungsimpulse nur eine Spannungsamplitude aufweisen, die nicht ausreicht, das Werkstück und einen darauf gebildeten Passivierungsfilm auszulösen.

Der Erfindung liegt als technisches Problem die Bereitstellung eines Verfahrens und einer Vorrichtung der eingangs genannten Art zugrunde, die ein neuartiges, vorteilhaftes Kriterium ur Erfassung und/oder Steuerung des Elektrodenabstandes beinhalten.

Die Erfindung löst dieses Problem durch die Bereitstellung eines Verfahren mit den Merkmalen des Anspruchs 1 oder 2 und einer Vorrichtung mit den Merkmalen des Anspruchs 3 oder 4. Erfindungsgemäß wird der Elektrodenstromstärkeverlauf, wie er sich nach Anlegen elektrischer Spannungsimpulse zwischen Werkzeugelektrode und Werkstückelektrode ergibt, daraufhin detektiert, ob er ein bestimmtes Verhalten zeigt, das vom Verhalten bei genügend großen Elektrodenabständen abweicht. Bei besagten größeren Elektrodenabständen folgt die Elektrodenstromstärke praktisch unverändert dem Verlauf der angelegten Spannungsimpulse, d.h. für den Fall angelegter Rechteckspannungsimpulse ergibt sich ein entsprechend rechteckförmiger Elektrodenstromstärkeverlauf. Davon ausgehend haben die Erfinder festegestellt, dass mit kleiner werdendem Elektrodenabstand ab einem gewissen Punkt die Elektrodenstromstärke von dem zum Spannungsimpulsverlauf formgleichen Verlauf in einer charakteristischen Weise abweicht, die eine anfängliche Überhöhung gefolgt von einer Unterschreitung des als Vergleichsverlauf dienenden, zu den Spannungsimpulsen formgleichen Verlaufs beinhaltet. Die Tatsache, dass diese charakteristische Formänderung des Elektrodenstromstärkeverlaufs bei gegebenen sonstigen Prozessparametem reproduzierbar genau dann auftritt, wenn der Elektrodenabstand einen gewissen Abstandschwellwert unterschreitet, wird erfindungsgemäß als entsprechendes Elektrodenabstandeskriterium herangezogen. So kann z.B. einer Systemsteuerung durch diese Methode der Elektrodenstromstärkedetektion mitgeteilt werden, ob der Abstand der Elektroden über oder unter dem besagten Abstandsschwellwert liegt, was von dieser zur Steuerung oder Regelung des Vorschubs der Werkzeugelektrode genutzt werden kann.

Gemäß den Ansprüchen 1 und 3 wird der gesamte Stromstärkeverlauf bewertet, d.h. festgestellt, ob die anfängliche Überhöhung und auch die anschließende Unterschreitung des Vergleichsverlaufs vorliegen, was dann als Abstandskriterium herangezogen wird. Gemäß den Ansprüchen 2 und 4, wird schon die Detektion der anfänglichen Überhöhung als Kriterium herangezogen, und zwar speziell als Soll- oder Mindestabstandskriterium. Mit anderen Worten kann auf diese Weiser der Vorschub der Werkzeugelektrode z.B. um den Abstandsschwellwert als Sollabstand geregelt werden, oder es kann gewährleistet werden, dass der Elektrodenabstand oberhalb des Abstandsschwellwertes gehalten wird. Dabei zeigt sich, dass der Abstandsschwellwert, bei dem die besagte charakteristische Änderung des Elektrodenstromstärkeverlaufs auftritt, im allgemeinen einen unteren Grenzbereich darstellt, unter den der Elektrodenabstand nicht merklich absinken sollte, damit nicht die bekannten Gefahren zu kleinen Elektrodenabstands auftreten, wie Kurzschlüsse und Überschläge.

Eine vorteilhafte Ausführungsform der Erfindung ist in den Zeichnung dargestellt und wird nachfolgend beschriebenen. Hierbei zeigen:
- Fig. 1: ein schematisches Blockdiagramm wesentlicher Teile einer Vorrichtung zur elektrochemisch materialabtragenden Werkstückbearbeitung.
- Fig. 2: Messresultate des Elektrodenstromstarkeverlaufs beim Arbeiten mit rechteckförmigen Spannungsimpulsen im Betrieb der Vorrichtung von Fig. 1 für zwei unterschiedliche Elektrodenabstände und

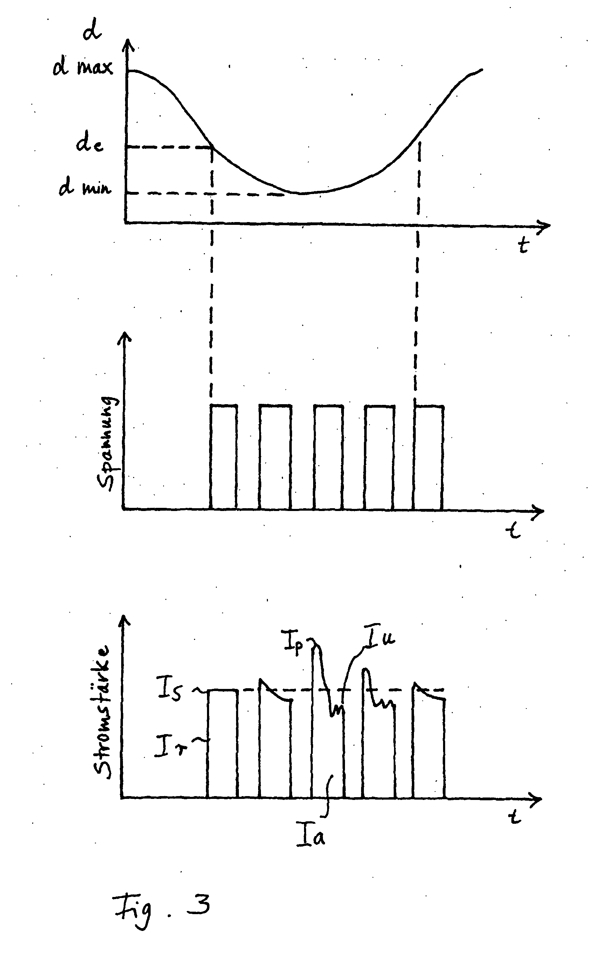

- Fig. 3: Diagramme zur Veranschaulichung der Steuerung des Elektrodenabstands anhand eines durch Beobachten des Stromstärkeverlaufs gemäß Fig. 2 gebildeten Elektrodenabstandskriteriums.

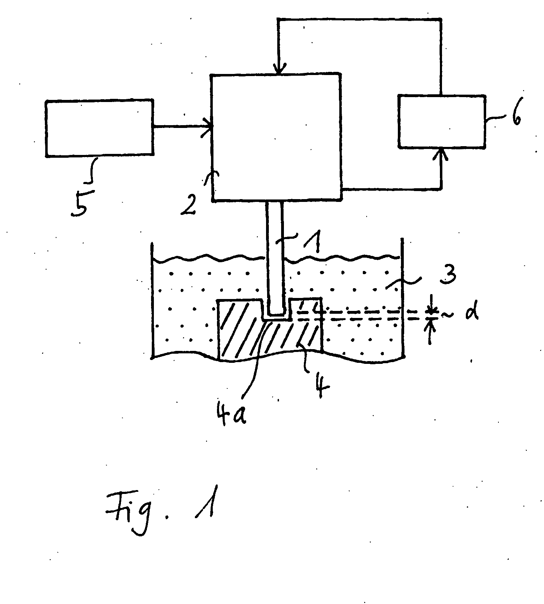

Fig. 1 zeigt schematisch eine Vorrichtung zur elektrochemisch materialabtragenden Werkstückbearbeitung, wobei der Einfachheit halber nur die hier interessierenden Komponenten wiedergegebenen sind. Im übrigen kann die Vorrichtung je nach Bedarf weitere, für Vorrichtungen dieser Art übliche Komponenten aufweisen.

Wie aus Fig. 1 ersichtlich, wird eine Werkzeugelektrode 1 von einer Vorschubeinheit 2 gehalten und gesteuert. Mit ihrem freien Ende taucht die Werkzeugelektrode 1 in einen Elektrolyten 3 ein, in dem ein zu bearbeitendes Werkstück 4 angeordnet ist. Die Vorschubeinheit 2 steuert im Betrieb die Vorschubbewegung der Werkzeugelektrode 1, wobei dies bevorzugt in Form einer Regelung erfolgt, mit deren Regelkreis ein gewünschter Sollabstand zwischen der Werkstückelektrode 1 und einer gegenüberliegenden, elektrisch leitfähigen Werkstückzone 4a eingestellt wird, die als Werkstückelektrode fungiert. Mittels einer Spannungsquelle 5 kann an die Werkzeugelektrode 1 eine gewünschte Spannung bezogen auf das Potenzial des Werkstücks 4 angelegt werden. Eine Strommesseinheit 6 erfasst die im Betrieb auf Grund der eingeprägten Spannung zwischen der Werkzeugelektrode 1 und dem Werkstück 4 fliesende Stromstärke in ihrem zeitlichen Verlauf und gibt ein entsprechendes Ausgangssignal an den Steuerungs/Regelungsteil der Vorschubeinheit 2 ab. ,

Die Vorrichtung von Fig. 1 kann insbesondere auf die Erzeugung sehr feiner Strukturen unter Anwendung von eingeprägten Rechteckspannungsimpulsen ausgelegt sein. Bei Bedarf kann eine zu den Spannungsimpulsen synchrone Oszillationsbewegung der Werkzeugelektrode 1 vorgesehen sein, welche die Elektrolytversorgung des Arbeitsspalts zwischen Werkzeugelektrode 1 und gegenüberliegender Werkstückzone 4a verbessern kann. Die übrigen Prozessparameter, wie Zusammensetzung und pH-Wert des Elektrolyten 3 und Amplitude der Spannungsimpulse, sind vorzugsweise so gewählt, dass insgesamt ein merklicher Reaktionsstrom und daher Materialabtrag gegeben ist, wobei die bekannten Vorteile der impulsförmigen Spannungs-/Strombeaufschlagung der Elektroden 1, 4a erzielt werden.

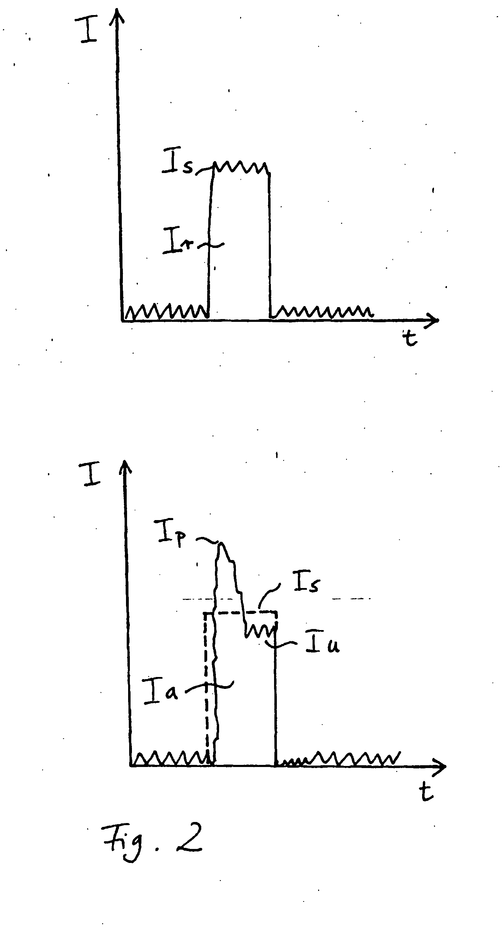

Des weiteren ist die Vorrichtung von Fig. 1 charakteristischenweise auf eine spezielle Steuerung, bzw. Regelung des Elektrodenabstands d ausgelegt. Dazu wird von folgendem, in Fig. 2 illustriertem Effekt, Gebrauch gemacht, der sich bei den vorliegend gewählten Prozessparametern für die von der Strommesseinheit 6 erfasste Elektrodenstromstärke zeigt. Im Fall größerer Elektrodenabstände ergibt sich für jeden angelegten Rechteckspannungsimpuls ein praktisch formgleicher, rechteckförmiger Verlauf I, der gemessenen Elektrodenstromstärke in Abhängigkeit von der Zeit t, wie sich dies im oberen Messsignaldiagramm von Fig. 2 widerspiegelt. Wenn der Elektrodenabstand einen gewissen Abstandsschwellwert unterschreitet, ergibt sich ein qualitativ anderes Stromstätke-Messsignal Iₐ, wie es im unteren Diagramm von Fig. 2 wiedergegeben ist. Verglichen mit dem im unteren Diagramm gestrichelt markierten, rechteckförmigen Stromstärkenverlauf Ir bei größerem Elektrodenabstand gemäß dem oberen Diagramm von Fig. 2, zeigt der Stromstärkeverlauf in diesem Fall eine anfänglich peakförmige Überhöhung gefolgt von einer Unterschreitung des in diesem Beispiel rechteckförmigen Stromstärke-Vergleichsverlauf Iᵣ für die restliche Impulsdauer. Mit anderen Worten steigt die gemessene Stromstärke dann auf einen Spitzenwert Iₚ an, der deutlich über der Stromstärkeamplitude Iₛ des rechteckförmigen Vergleichsverlaufs Iᵣ liegt, um dann anschließend auf einen niedrigeren Stromstärkebereich Iᵤ abzufallen und dort zu verbleiben, der etwas unterhalb der Stromstärke Iₛ des rechteckförmigen Vergleichsverlaufs Iᵣ bei größerem Elektrodenabstand, d. h. größerem Arbeitsspalt, liegt.

Es zeigt sich, dass es sich hier um eine reproduzierbare qualitative Änderung des Elektrodenstromstärkeverlaufs in Abhängigkeit vom Elektrodenabstand handelt, was vorliegend dazu genutzt wird, diese Änderung des Stromstärkeverlaufs als ein Elektrodenabstandskriterium für die Einstellung des Elektrodenabstands d heranzuziehen. Dabei zeigt sich weiter, dass der Abstandsschwellwert, bei dem diese charakteristische Änderung des Stromstärkeverlaufs auftritt, im allgemeinen einem Minimalabstand entspricht, der im Betrieb nicht merklich und dauerhaft unterschritten werden sollte, da ansonsten die bekannten Probleme zu geringen Elektrodenabstands auftreten. Andererseits ist ein geringer Elektrodenabstand aus verschiedenen Gründen, wie Abtraggeschwindigkeit und Strukturierungsgenauigkeit, wünschenswert. Daher kann der durch die Detektion der qualitativen Änderung des Elektrodenstromstärkeverlaufs erfassbare Abstandsschwellwert vorzugsweise als Sollabstandswert oder Mindestabstandswert für die Steuerung/Regelung des Werkzeugelektrodenvorschubs verwendet werden.

Die entsprechende Vorgehensweise ist beispielhaft in Fig. 4 illustriert. Im obersten Diagramm von Fig. 4 ist einer Weg-ZeitDarstellung eine Hubbewegung der Werkzeugelektrode zwischen einem vorgegebenen Maximalabstand dₘₐₓ und einem vorgegebenen Minimalabstand dₘᵢₙ wiedergegeben, wie sie sich typischerweise für eine oszillatorische Vorschubbewegung ergibt. Im darunterliegenden Diagramm ist der typische Zeitverlauf der angelegten Spannung aufgetragen. Wie daraus ersichtlich, wird eine Folge von Rechteckspannungsimpulsen angelegt, so lange der Elektrodenabstand unterhalb eines gewissen Einsatzabstandes dₒ liegt.

Das untere Diagramm von Fig. 4 veranschaulicht qualitativ die zugehörige gemessene Elektrodenstromstärke in ihrem zeitabhängigen Verlauf. Wie daraus ersichtlich, ergibt sich zunächst ein zur Form der Rechteckspannungsimpulse formgleicher, rechteckförmiger Stromstärkeverlauf Iᵣ so lange der Elektrodenabstand noch deutlich über dem Minimalabstand dₘᵢₙ liegt, der in diesem Fall den Abstandsschwellwert für die qualitative Änderung des Stromstärkeverlaufs repräsentiert. Mit zunehmender Annäherung des Elektrodenabstands d an den Minimalabstand dₘᵢₙ von oben ändert sich demgemäß der Stromstärkeverlauf in einen deutlich von der Rechteckform abweichenden Verlauf Iₐ mit der besagten anfänglichen Überhöhung und anschließenden Unterschreitung des rechteckförmigen Vergleichsverlauf Iᵣ. Die Detektion dieser charakteristischen Änderung des Stromstärkeverlaufs wird vom System dahingehend interpretiert, dass der Elektrodenabstand d den Bereich des Minimalabstands dₘᵢₙ erreicht hat, so dass die Vorschubsteuerung dafür sorgen kann, dass der Minimalabstand dₘᵢₙ nicht merklich unterschritten wird.

Bei wiederansteigendem Elektrodenabstand d kehrt der gemessene Stromstärkeverlauf allmählich wieder in die zu den Spannungsimpulsen formgleiche Rechteckgestalt Iᵣ zurück. Dabei ist eine gewisse Hysterese beobachtbar, d. h. der rechteckförmige Stromstärkeverlauf Iᵣ wird mit ansteigendem Elektrodenabstand erst bei einem Abstandswert erreicht, der etwas über dem Abstandswert liegt, bei dem mit sinkendem Elektrodenabstand die Abweichung des rechteckförmigen Verlaufs aufgetreten ist. Diese Hysterese kann vom System geeignet berücksichtigt werden.

Aus der obigen Beschreibung eines vorteilhaften Ausführungsbeispiels wird deutlich, dass die erfindungsgemäße Vorrichtung und das erfindungsgemäße Verfahren eine effektive und genau arbeitende elektrochemische Materialabtragung an entsprechend zu strukturierenden Werkstücken ermöglichen. Insbesondere kann zum einen die Methode impulsförmiger Spannungsbeaufschlagung der Werkzeugelektrode verwendet werden, bei Bedarf kombiniert mit einer dazu synchron oszillierenden Hub-/Vorschubbewegung der Werkzeugelektrode, und zum anderen kann die Einhaltung eines gewünschten Soll- oder Mindestabstands in einfacher Weise durch eine geeignete Detektion der Elektrodenstromstärke gewährleistet werden. Dazu kann ein Regelkreis dienen, der die Vorschubbewegung der Werkzeugelektrode in Abhängigkeit vom gemessenen Stromstärkeverlauf regelt.

Es versteht sich, dass außer dem gezeigten weitere erfindungsgemäße Ausführungsbeispiele realisierbar sind. So können je nach Anwendungsfall auch Spannungsimpulse von anderer als der gezeigten Rechteckform Verwendung finden. Die Beurteilung des gemessenen Stromstärkeverlaufs erfolgt jeweils ausgehend von dem sich für genügend große Elektrodenabstände ergebenden, zum Verlauf der Spannungsimpulse formgleichen Verlauf der Elektrodenstromstärke.

Diesbezüglich vorteilhafte Varianten andersartiger Spannungsimpulse können insbesondere die Wahl mehrstufiger und/oder mehrteiliger Spannungsimpulse umfassen. So kann z. B. ein zweistufiger Spannungsimpuls mit einer kurzen, hohen Impulsstufe, die zur verfahrensgemäßen Bestimmung des Elektrodenabstandes aus der Messung des Stromstärkeverlaufs und damit zur Steuerung/Regelung des Elektrodenabstandes benutzt wird, und mit einer anschließenden zweiten Impulsstufe auf niedrigerem Spannungsniveau verwendet werden. Das Zurückfahren des Spannungsniveaus führt zu geringerem ohmschen Verlusten im Elektrolyt und damit zu geringerer Erwärmung. Andererseits ist durch die kurze, hohe Impulsstufe eine zuverlässige Bestimmung des Elektrodenabstandes gewährleistet. Bei Wahl eines mehrteiligen, d. h. aus mehreren Einzelpulsen bestehenden Spannungsimpulses pro Arbeitstakt kann der Messungsvorgang zeitlich vom eigentlichen Arbeitsvorgang getrennt werden. So kann in diesem Fall das Anlegen eines Messimpulses hoher Spannungsamplitude gefolgt vom Anlegen eines oder mehrerer Arbeitsimpulse niedriger Spannungsamplitude vorgesehen sein. Durch eine solche Trennung von Mess- und Arbeitsimpulsen kann gegebenenfalls der Wirkungsgrad des Systems merklich verbessert werden. Je nach Anwendungsfall ist selbstverständlich das Anlegen einer beliebigen Folge von Spannungsimpulsen unterschiedlicher Amplitude und Dauer möglich.

## Patentansprüche

1. Verfahren zur elektrochemisch materialabtragenden Werkstückbearbeitung, bei dem
- eine Werkzeugelektrode (1) innerhalb eines Elektrolyten (3) im Abstand (d) zu einer zu bearbeitenden, elektrisch leitfähigen und als Werkstückelektrode fungierenden Werkstückzone (4a) positioniert wird,
- zwischen die Werkzeugelektrode und die Werkstückelektrode elektrische Spannungsimpulse angelegt werden und
- der zugehörige Elektrodenstromstärkeverlauf erfasst und als Elektrodenabstandskriterium herangezogen wird,
**dadurch gekennzeichnet, dass**
- detektiert wird, ob der Elektrodenstromstärkeverlauf während eines jeweiligen Spannungsimpulses bezogen auf einen zum Spannungsimpulsverlauf formgleichen Vergleichsverlauf (Iᵣ) eine anfängliche Überhöhung (Iₚ) gefolgt von einer Unterschreitung (Iᵤ) des Vergleichsverlaufs zeigt, und dies als ein Elektrodenabstandskriterium herangezogen wird.

2. Verfahren zur elektrochemisch materialabtragenden Werkstückbearbeitung, insbesondere nach Anspruch 1, bei dem
- eine Werkzeugelektrode (1) innerhalb eines Elektrolyten (3) im Abstand (d) zu einer zu bearbeitenden, elektrisch leitfähigen und als Werkstückelektrode fungierenden Werkstückzone (4a) positioniert wird,
- zwischen die Werkzeugelektrode und die Werkstückelektrode elektrische Spannungsimpulse angelegt werden und
- der zugehörige Elektrodenstromstärkeverlauf erfasst und als Elektrodenabstandskriterium herangezogen wird,
**dadurch gekennzeichnet dass**,
- detektiert wird, ob der Elektronenstromstärkeverlauf während eines jeweiligen Spannungsimpulses bezogen auf einen zum Spannungsimpulsverlauf formgleichen Vergleichsverlauf (Iᵣ) eine anfängliche Überhöhung(Iₚ) zeigt, und dies als ein Sollabstandskriterium oder Mindestabstandskriterium für den Elektrodenabstand herangezogen wird.

3. Vorrichtung zur elektrochemisch materialabtragenden Werkstückbearbeitung, mit
- einer Werkzeugelektrode (1), die im Abstand zu einer zu bearbeitenden, elektrisch leitfähigen und als Werkstückelektrode fungierenden Werkstückzone (4a), positionierbar ist,
- Mitteln (2, 5) zum Anlegen elektrischer Spannungsimpulse zwischen die Werkzeugelektrode und die Werkstückelektrode und
- Mitteln (2, 6) zur Erfassung des zugehörigen Elektrodenstromstärkeverlaufs und Auswertung desselben als Elektrodenabstandskriterium
**dadurch gekennzeichnet, dass**
- die Mittel (2, 6) zur Erfassung und Auswertung des Elektrodenstromstärkeverlaufs zur Detektion, ob der Elektrodenstromstärkeverlauf während eines jeweiligen Spannungsimpulses bezogen auf einen zum Spannungsimpulsverlauf formgleichen Vergleichsverlauf (Iᵣ) eine anfängliche Überhöhung (Iₚ) gefolgt von einer Unterschreitung (Iᵤ) des Vergleichsverlaufs zeigt, ausgelegt sind und dies als ein Elektrodenabstandskriterium werten.

4. Vorrichtung zur elektrochemisch materialabtragenden Werkstückbearbeitung, insbesondere nach Anspruch 3, mit
- einer Werkzeugelektrode (1), die im Abstand zu einer zu bearbeitenden, elektrisch leitfähigen und als Werkstückelektrode fungierenden Werkstückzone (4a) positionierbar ist,
- Mitteln (2, 5) zum Anlegen elektrischer Spannungsimpulse zwischen die Werkzeugelektrode und die Werkstückelektrode und
- Mitteln (2, 6) zur Erfassung des zugehörigen Elektrodenstromstärkeverlaufs und Auswertung desselben als Elektrodenabstandskriterium,
**dadurch gekennzeichnet, dass**
- Die Mittel (2, 6) zur. Erfassung und Auswertung des Elektrodenstromstärkeverlaufs zur Detektion, ob der Elektrodenstromstärkeverlauf während eines jeweiligen Spannungsimpulses bezogen auf einen zum Spannungsimpulsverlauf formgleichen Vergleichsverlauf (Iᵣ) eine anfängliche Überhöhung (Iₚ) zeigt, ausgelegt sind und dies als ein Sollabstandskriterium oder Mindestabstandskriterium für den Elektrodenabstand werten.

## Claims

1. A method for machining work pieces by electrochemically removing material, wherein
- a tool electrode (1) is positioned within an electrolyte (3) such that it is spaced apart by a distance (d) from an electrically conductive work piece zone (4a) to be processed that acts as the work piece electrode, wherein
- electric voltage pulses are applied between the tool electrode and the work piece electrode, and wherein
- the characteristics of the corresponding electrode current intensity are detected and taken into account as an electrode spacing criterion,
**characterized in that**
- it is detected whether the characteristics of the electrode current intensity during a respective voltage pulse initially exceed (Iₚ) a comparative set of characteristics (Iᵣ) of the same form as the voltage pulse characteristics and subsequently drop (Iᵤ) below this set of characteristics, and **in that** this is taken into account as an electrode spacing criterion.

2. The method according to Claim 1 for machining work pieces by electrochemically removing material, wherein
- a tool electrode (1) is positioned within an electrolyte (3) such that it is spaced apart by a distance (d) from an electrically conductive work piece zone (4a) to be processed that acts as the work piece electrode, wherein
- electric voltage pulses are applied between the tool electrode and the work piece electrode, and wherein
- the characteristics of the corresponding electrode current intensity are detected and taken into account as an electrode spacing criterion,
**characterized in that**
- it is detected whether the characteristics of the electrode current intensity during a respective voltage pulse initially exceed (Iₚ) a comparative set of characteristics (Iᵣ) of the same form as the voltage pulse characteristics, and **in that** this is taken into account as a nominal or minimum electrode spacing criterion.

3. A device for machining work pieces by electrochemically removing material, with
- a tool electrode (1) that can be positioned such that it is spaced apart from an electrically conductive work piece zone (4a) to be processed that serves as the work piece electrode,
- means (2, 5) for applying electric voltage pulses between the tool electrode and the work piece electrode, and
- means (2, 6) for detecting the characteristics of the corresponding electrode current intensity and the evaluation thereof as an electrode spacing criterion,
**characterized in that**
- the means (2, 6) for detecting and evaluating the characteristics of the electrode current intensity are designed for detecting whether the characteristics of the electrode current intensity during a respective voltage pulse initially exceed (Iₚ) a comparative set of characteristics (Iᵣ) of the same form as the voltage pulse characteristics and subsequently drop (Iᵤ) below this set of characteristics, and **in that** said means evaluate this as an electrode spacing criterion.

4. The device according to Claim 3 for machining work pieces by electrochemically removing material, with
- a tool electrode (1) that can be positioned such that it is spaced apart from an electrically conductive work piece zone (4a) to be processed that serves as the work piece electrode,
- means (2, 5) for applying electric voltage pulses between the tool electrode and the work piece electrode, and
- means (2, 6) for detecting the characteristics of the corresponding electrode current intensity and the evaluation thereof as an electrode spacing criterion
**characterized in that**
- the means (2, 6) for detecting and evaluating the characteristics of the electrode current intensity are designed for detecting whether the characteristics of the electrode current intensity during a respective voltage pulse initially exceed (Iₚ) a comparative set of characteristics (Iᵣ) of the same form as the voltage pulse characteristics, and **in that** said means evaluate this as a nominal or minimum electrode spacing criterion.

## Revendications

1. Procédé d'usinage de pièces par enlèvement électrochimique de matière, dans lequel
- une électrode d'outil (1) est positionnée à l'intérieur d'un électrolyte (3) à distance (d) d'une zone de pièce (4a) à usiner conductrice d'électricité et faisant office d'électrode de pièce,
- des impulsions électriques de tension sont appliquées entre l'électrode d'outil et l'électrode de pièce et
- l'évolution correspondante de l'intensité de courant de l'électrode est enregistrée et utilisée comme critère de distance de l'électrode,
**caractérisé en ce que**
- il est détecté si l'évolution d'intensité de courant de l'électrode pendant une impulsion respective de tension présente, par rapport à une évolution comparative (Iᵣ) de même forme que l'évolution de l'impulsion de tension, un dépassement initial (Iₚ) suivi d'un sous-dépassement (Iᵤ) de l'évolution comparative, et que ceci est utilisé comme critère de distance de l'électrode.

2. Procédé d'usinage de pièces par enlèvement électrochimique de matière, notamment selon la revendication 1, dans lequel
- une électrode d'outil (1) est positionnée à l'intérieur d'un électrolyte (3) à distance (d) d'une zone de pièce (4a) à usiner conductrice d'électricité et faisant office d'électrode de pièce,
- des impulsions électriques de tension sont appliquées entre l'électrode d'outil et l'électrode de pièce et
- l'évolution correspondante de l'intensité de courant de l'électrode est enregistrée et utilisée comme critère de distance de l'électrode,
**caractérisé en ce que**
- il est détecté si l'évolution d'intensité de courant de l'électrode pendant une impulsion respective de tension présente, par rapport à une évolution comparative (Iᵣ) de même forme que l'évolution de l'impulsion de tension, un dépassement initial (Iₚ) et que ceci est utilisé comme critère de distance théorique ou critère de distance théorique ou critère de distance minimale pour la distance de l'électrode.

3. Dispositif d'usinage de pièces par enlèvement électrochimique de matière, comportant
- une électrode d'outil (1) qui est positionnable à distance d'une zone de pièce (4a) à usiner conductrice d'électricité et faisant office d'électrode de pièce,
- des moyens (2, 5) d'application d'impulsions électriques de tension entre l'électrode de pièce et l'électrode d'outil et
- des moyens (2, 6) d'enregistrement de l'évolution correspondante de l'intensité de courant de l'électrode et d'exploitation de celle-ci en tant que critère de distance de l'électrode,
**caractérisé en ce que**
- les moyens (2, 6) d'enregistrement et d'exploitation de l'évolution d'intensité de courant d'électrode sont conçus pour détecter si l'évolution d'intensité de courant d'électrode présente, pendant une impulsion respective de tension, par rapport à une évolution comparative (Iᵣ) de même forme que l'évolution de l'impulsion de tension, un dépassement initial (Iₚ) suivi d'un sous-dépassement (Iᵤ) de l'évolution comparative, et considèrent ceci comme un critère de distance de l'électrode.

4. Dispositif d'usinage de pièces par enlèvement électrochimique de matière, notamment selon la revendication 3, comportant
- une électrode d'outil (1) qui est positionnable à distance d'une zone de pièce (4a) à usiner conductrice d'électricité et faisant office d'électrode de pièce,
- des moyens (2, 5) d'application d'impulsions électriques de tension entre l'électrode de pièce et l'électrode d'outil et
- des moyens (2, 6) d'enregistrement de l'évolution correspondante d'intensité de courant d'électrode et d'exploitation de celle-ci en tant que critère de distance de l'électrode,
**caractérisé en ce que**
- les moyens (2, 6) d'enregistrement et d'exploitation de l'évolution d'intensité de courant d'électrode sont conçus pour détecter si l'évolution d'intensité de courant d'électrode présente, pendant une impulsion respective de tension, par rapport à une évolution comparative (Iᵣ) de même forme que l'évolution de l'impulsion de tension, un dépassement initial (Iₚ), et considèrent ceci comme un critère de distance théorique ou critère de distance minimale pour la distance de l'électrode.
